# EUROPÄISCHE PATENTSCHRIFT

(11) **EP 2 848 299 B1**
(45) Veröffentlichungstag und Bekanntmachung des Hinweises auf die Patenterteilung: **14.08.2019**
(21) Anmeldenummer: 13183890.6
(22) Anmeldetag: 11.09.2013
(51) Int. Cl.: B01J 2/10, B01J 2/12, B01J 2/00, C22B 1/16, C22B 1/24, C22B 1/243

(54) **VERFAHREN UND VORRICHTUNG ZUR HERSTELLUNG VON GRANULATEN**
METHOD AND DEVICE FOR PRODUCING GRANULATES
PROCÉDÉ ET DISPOSITIF DESTINÉS À LA FABRICATION DE GRANULÉS

(43) Veröffentlichungstag der Anmeldung: 18.03.2015
(73) Patentinhaber: Primetals Technologies Austria GmbH, 4031 Linz (AT)
(72) Erfinder: Aichinger, Christoph, 4100 Ottensheim (AT); Reidetschlaeger, Johann, A-4020 Linz (AT); Hötzinger, Stefan, 4600 Wels (AT); Laaber, Karl, 4407 Dietach (AT)
(74) Vertreter: Metals@Linz

(56) Entgegenhaltungen:
- EP-A1- 1 541 700
- US-B1- 8 118 582

## Beschreibung

### Technisches Gebiet

Die Erfindung betrifft ein Verfahren zur Herstellung von Granulaten, wobei die Herstellung der Granulate das Mischen von Rohstoffen, insbesondere Eisenerz, Feineisenerzkonzentrate, Koksgruß, Kalkstein und gegebenenfalls Zusatzstoffen, unter Zugabe von Wasser zu einem Gemisch in einem Intensivmischer und das Granulieren und Rollieren des Gemisches in einem Granulator beziehungsweise in einer Rolliertrommel umfasst.

Außerdem betrifft die Erfindung eine Vorrichtung zur Durchführung des erfindungsgemäßen Verfahrens.

### Stand der Technik

Es ist bekannt, dass in metallurgische Verarbeitungsaggregate, beispielsweise in Hochöfen, eisenhältige Einsatzstoffe eingebracht werden, um daraus flüssiges Roheisen zu erschmelzen. Ein bekannter Einsatzstoff ist Sinter. Sinter wird beispielsweise durch Brennen einer Eisenerze, Kreislaufstoffe und Brennstoff umfassenden Sinterrohmischung in einer Sinteranlage hergestellt. Dazu wird die Sinterrohmischung als Schicht auf ein Rost- oder Sinterband aufgebracht und in die Sinteranlage eingebracht. In der Sinteranlage wird die Schicht gezündet, wonach sich eine Brennfront ausbildet. Die Brennfront wird mittels eines Gases, beispielsweise Luft, welches durch die Schicht geblasen oder gesogen wird, vorangetrieben, und durchzieht die gesamte Schicht. Dabei entsteht gebrannter Sinter beziehungsweise der sogenannte Sinterkuchen, welcher anschließend, gegebenenfalls nach Brechen und Klassifizieren, als Einsatzstoff in das metallurgische Verarbeitungsaggregat eingebracht wird. Für einen effizienten Sinterprozess und für die optimale Ausbildung der Brennfront ist eine gewisse Mindestpermeabilität der Schicht erforderlich. Das bedeutet, dass die Schicht auf dem Rost- oder Sinterband eine gewisse Gasdurchlässigkeit nicht unterschreiten darf. Die Permeabilität korreliert mit dem grobkörnigen Materialanteil in der Schicht. Je größer der grobkörnige Materialanteil ist, desto höher ist die Permeabilität und umgekehrt. Außerdem wird die Permeabilität auch durch die geometrische Form des in der Sinterrohmischung enthaltenen Materials beeinflusst. Eine bekannte Maßnahme zur Sicherstellung der Mindestpermeabilität der Schicht ist das Einbringen der Schicht in Form von Granulaten bestimmter Größe, bestimmter geometrischer Form und bestimmter Zusammensetzung in die Sinteranlage.

Der Trend in der Minenindustrie geht immer mehr in Richtung feinteilchenförmiger Rohstoffe, wie beispielsweise Feineisenerzkonzentrate, die eine Korngröße von weniger als 200 µm aufweisen. Außerdem ist auch die Nutzung von sonstigen feinteilchenförmigen Rohstoffen, wie beispielsweise Stahlwerkstaub oder Zusatzstoffe, erwünscht.

Das Mischen und Granulieren solcher feinteilchenförmigen Rohstoffe ist mit den aus dem Stand der Technik bekannten Methoden mit erheblichen Schwierigkeiten verbunden, da die feinteilchenförmigen Rohstoffe nur begrenzt in die Granulate eingearbeitet werden können. Ein beträchtlicher Anteil dieser feinteilchenförmigen Rohstoffe bleibt bei Anwendung der bekannten Methoden feinteilchenförmig zurück. Zudem haben nach dem Stand der Technik hergestellte Granulate oftmals unterschiedliche Korngrößen und/oder eine für den Sinterprozess ungünstige geometrische Form.

Ein Einbringen derartiger Granulate als Schicht in eine Sinteranlage hat negative Auswirkungen auf die Permeabilität der Schicht und damit auch auf die Produktivität der Sinteranlage.

In der Schrift US8118582-B1 Herstellung von Trockenpellet aus biologischem Material wie z.B. Mais, Sojabohnen gezeigt.

Die Schrift EP1541700-A1 bezieht sich auf ein Verfahren zum Granulieren von Pulverförmigen Eisenerz. Bei diesem Verfahren wird ein Polymer hinzugemischt und anschließend wird das Granulat mit mindestens einem aus drei vorgeschlagenen Verfahren erzeugt.

### Zusammenfassung der Erfindung

### Technische Aufgabe

Aufgabe der vorliegenden Erfindung ist die Bereitstellung eines Verfahrens zur Herstellung von Granulaten, bei dem die aus dem Stand der Technik bekannten Nachteile überwunden werden. Eine weitere Aufgabe der Erfindung ist die Bereitstellung einer Vorrichtung zur Durchführung des erfindungsgemäßen Verfahrens.

### Technische Lösung

Gelöst wird diese Aufgabe durch ein Verfahren zur Herstellung von Granulaten, wobei die Herstellung der Granulate folgende Verfahrensschritte umfasst:
- in einem ersten Verfahrensschritt intensives Mischen von Rohstoffen, insbesondere Eisenerz, Feineisenerzkonzentrate, Koksgruß, Kalkstein, und gegebenenfalls Zusatzstoffen, insbesondere Sinterrückgut, Bindemittel, Staub, Stahlwerksreststoffe, unter Zugabe von Wasser zu einem Gemisch in einem Intensivmischer,
- in einem zweiten Verfahrensschritt Einbringen des Gemisches, und gegebenenfalls von Zusatzstoffen, in einen Granulator, und Granulierung des Gemisches, und gegebenenfalls der Zusatzstoffe, unter Zugabe von Wasser zu Rohgranulaten,
- in einem dritten Verfahrensschritt Einbringen der Rohgranulate, Einbringen von Wasser, und gegebenenfalls Einbringen von Zusatzstoffen und/oder Feinkoks, in eine Rolliertrommel, und Rollieren der Rohgranulate - und gegebenenfalls Beschichten der Rohgranulate mit Kalziumoxid und/oder Kalziumhydroxid und/oder dem Feinkoks - zu den Granulaten.

Im ersten Verfahrensschritt werden die Rohstoffe, insbesondere Eisenerz, Feineisenerzkonzentrate, Koksgruß, Kalkstein und gegebenenfalls die Zusatzstoffe, insbesondere Sinterrückgut, Bindemittel, Staub, Stahlwerksreststoffe im Intensivmischer gemischt. Die Zusatzstoffe können auch Dolomit, Olivin und Serpentin umfassen. Als Bindemittel kommen beispielsweise Kalziumoxid und/oder Kalziumhydroxid in Frage. Im Intensivmischer finden durch intensives Mischen der Rohstoffe zunächst eine Zerteilung und ein Aufschluß von möglicherweise vorhandenen Rohstoffagglomeraten statt. Zusätzlich findet dabei eine Homogenisierung beziehungsweise eine besonders gleichmäßige Durchmischung der Rohstoffe statt. Im dabei entstehenden Gemisch befinden sich gegebenenfalls auch schon erste Mikrogranulate, das sind kleinste Zusammenballungen der Rohstoffe, bei denen mehrere kleinere Rohstoffpartikel an einzelnen größeren Rohstoffpartikeln anhaften.

Durch die Zugabe von Wasser erfolgt eine optimale Wasserverteilung im Gemisch als Vorbereitung für die nachfolgenden Verfahrensschritte.

Unter Eisenerz ist eisenoxidhältiges Material mit einer maximalen Korngröße von 10mm zu verstehen. Unter Feineisenerzkonzentraten ist eisenoxidhältiges Material mit einer maximalen Korngröße von 200pm zu verstehen. Die Feineisenerzkonzentrate umfassen insbesondere auch eisenoxidhältiges Pelletfeed mit einer Korngröße von maximal 45pm. Unter Sinterrückgut ist Unterkorn und/oder Überkorn eines eisenoxidhältigen Materials zu verstehen, welches bei einer Klassifizierung des eisenoxidhältigen Materials anfällt. Die Korngröße des Sinterrückgutes liegt zwischen 3mm und 8mm, vorzugsweise zwischen 3mm und 5mm. Die maximale Korngröße des Kalksteins liegt, ebenso wie die Korngröße des Koksgrußes bei 5mm, vorzugsweise bei 3mm. Die maximale Korngröße des Bindemittels, vorzugsweise Kalziumoxid beziehungsweise Kalziumhydroxid, liegt bei 3mm, vorzugsweise bei 1mm. Die maximale Korngröße des Staubes liegt bei 1mm, während die maximale Korngröße der Stahlwerkreststoffe 8mm beträgt.

Unter Stahlwerksreststoffe sind eisenhältige Reststoffe aus einem Stahlwerk zu verstehen. Unter Staub ist vorzugsweise in einem Hüttenwerk anfallender eisenhältiger Staub, wie beispielsweise Staub aus einer Sinteranlage, aus einem Hochofen oder aus einem Walzwerk oder eisenhältiger Staub aus entsprechenden zugeordneten Entstaubungseinrichtungen zu verstehen.

Im zweiten Verfahrensschritt wird das Gemisch gegebenenfalls zusammen mit zumindest einem der oben angeführten Zusatzstoffe in den Granulator eingebracht. Danach erfolgt die Granulierung des Gemisches, gegebenenfalls zusammen mit zumindest einem der Zusatzstoffe, unter Zugabe von Wasser zu den Rohgranulaten. Während der Granulierung bleiben kleinere Partikel des Gemisches an bereits vorhandenen größeren Partikeln, den gegebenenfalls beim intensiven Mischen bereits entstandenen Mikrogranulaten, haften und bilden so immer größere Rohgranulate. Durch die Zugabe von Wasser wird der Feuchtigkeitsgehalt des Gemisches eingestellt und für die Granulierung optimiert.

Die so hergestellten Rohgranulate werden im dritten Verfahrensschritt, gegebenenfalls zusammen mit zumindest einem der oben angeführten Zusatzstoffe in die Rolliertrommel eingebracht. In der Rolliertrommel erfolgt unter Zugabe von Wasser das Rollieren der Rohgranulate. Optional erfolgt in der Rolliertrommel zusätzlich das Beschichten der Rohgranulate mit Kalziumoxid und/oder Kalziumhydroxid und/oder dem Feinkoks zu den Granulaten. Dazu werden den Rohgranulaten in der Rolliertrommel und/oder vor dem Einbringen in die Rolliertrommel das Kalziumoxid und/oder das Kalziumhydroxid und/oder der Feinkoks zugemischt.

Unter Rollieren ist ein Abrunden und Glätten der Oberfläche der Rohgranulate durch gegenseitiges Reiben der Rohgranulate aneinander zu verstehen. Dazu werden die Rohgranulate in der Rolliertrommel zumindest teilweise in Rotation um die eigene Achse versetzt.

Durch das Rollieren der Rohgranulate wird die Oberfläche der Granulate geglättet und zu einer nahezu idealen Kugelform geformt. Durch das Beschichten wird einerseits eine genau definierte Korngröße der Rohgranulate, andererseits eine genau definierte chemische Zusammensetzung der Oberflächenschicht der Rohgranulate eingestellt.

Die erfindungsgemäßen Granulate werden vorzugsweise in einer Sinteranlage eingesetzt. Die Granulate werden dabei als Sinterrohmischung in Form einer Schicht in die Sinteranlage eingebracht. Die aus den erfindungsgemäßen Granulaten bestehende Schicht weist im Vergleich zu nach dem Stand der Technik hergestellten Granulaten eine homogenere Korngrößenverteilung und damit eine höhere Permeabilität auf. Dadurch wird die Produktivität des Sinterprozesses erhöht, womit eine Verkleinerung diverser Bauteile der Sinteranlage möglich ist. Beim erfindungsgemäßen Verfahren können im Gegensatz zum Stand der Technik auch feinteilchenförmige Rohstoffe - darunter sind insbesondere Rohstoffe mit einer Korngröße von maximal 200pm zu verstehen - gut verarbeitet werden. Weiter kann die Zugabe von Brennstoff, beispielsweise Koks, oder die Zugabe von Bindemittel, beispielsweise Kalziumoxid beziehungsweise Kalziumhydroxid, beim Sinterprozess verringert werden, da diese Stoffe bereits gleichmäßig verteilt in den erfindungsgemäß hergestellten Granulaten beziehungsweise in deren Oberflächenschicht vorhanden sind.

In einer bevorzugten Ausführungsform des erfindungsgemäßen Verfahrens erfolgt das intensive Mischen des Gemisches im Intensivmischer für mindestens 30 Sekunden, bevorzugt für mindestens 40 Sekunden und für maximal 90 Sekunden, bevorzugt für maximal 60 Sekunden.

Da es sich um einen Intensivmischer mit einer hohen Antriebsleistung, vorzugsweise zwischen 1 Kilowatt pro 100 Kubikdezimeter Gemisch und 10 Kilowatt pro 100 Kubikdezimeter Gemisch, handelt, erfolgt, verglichen mit aus dem Stand der Technik bekannten Verweilzeiten von 3 Minuten bis 4 Minuten, eine optimale Durchmischung bereits in sehr viel kürzerer Zeit. Außerdem wird auf Grund der hohen Antriebsleistung des Intensivmischers eine optimale Durchmischung beziehungsweise Homogenisierung des Gemisches sichergestellt.

Eine weitere bevorzugte Ausführungsform des erfindungsgemäßen Verfahrens ist dadurch gekennzeichnet, dass die Granulierung des Gemisches im Granulator für mindestens 50 Sekunden, bevorzugt für mindestens 60 Sekunden und für maximal 120 Sekunden, bevorzugt für maximal 90 Sekunden erfolgt.

Verglichen mit aus dem Stand der Technik bekannten Verweilzeiten von etwa 4 Minuten, erfolgt die erfindungsgemäße Granulierung des Gemisches zu den Rohgranulaten bereits in sehr viel kürzerer Zeit.

In einer anderen bevorzugten Ausführungsform des erfindungsgemäßen Verfahrens weist der Wassergehalt des Gemisches eine Untergrenze von 3 Massenprozent, vorzugsweise 4 Massenprozent und eine Obergrenze von 9 Massenprozent, vorzugsweise 8 Massenprozent, bezogen auf die Gesamtmasse des Gemisches, auf.

Dadurch wird sichergestellt, dass das Gemisch einen für die Granulierung im Granulator und einen für die Rollierung beziehungsweise Beschichtung in der Rolliertrommel optimalen Wassergehalt aufweist.

Ein weiterer Gegenstand der Erfindung ist eine Vorrichtung zur Durchführung des erfindungsgemäßen Verfahrens, wobei die Vorrichtung umfasst:
- einen Intensivmischer zum intensiven Mischen von Rohstoffen, insbesondere Eisenerz, Feineisenerzkonzentrate, Koksgruß, Kalkstein, und gegebenenfalls Zusatzstoffen, insbesondere Sinterrückgut, Bindemittel, Staub, Stahlwerksreststoffe, unter Zugabe von Wasser zu einem Gemisch,
- einen operativ mit dem Intensivmischer verbundenen Granulator zur Granulierung des Gemisches, und gegebenenfalls Zusatzstoffen, unter Zugabe von Wasser zu Rohgranulaten,
- eine operativ mit dem Granulator verbundene Rolliertrommel zum Rollieren der Rohgranulate - und gegebenenfalls Beschichten der Rohgranulate mit Kalziumoxid und/oder Kalziumhydroxid und/oder Feinkoks - zu Granulaten.

Der Intensivmischer ist dadurch charakterisiert, dass er eine Antriebsleistung, vorzugsweise zwischen 1 Kilowatt pro 100 Kubikdezimeter Gemisch und 10 Kilowatt pro 100 Kubikdezimeter Gemisch aufweist. Der Granulator ist eingangsseitig operativ mit dem Intensivmischer verbunden. Operativ bedeutet in diesem Zusammenhang, dass der Intensivmischer und der Granulator derart miteinander verbunden sind, dass das im Intensivmischer hergestellte Gemisch vom Intensivmischer in den Granulator eingebracht werden kann. Beispielsweise erfolgt dies mittels eines ersten Förderbandes oder einer ersten Schurre. Ausgangsseitig ist der Granulator operativ mit der Rolliertrommel verbunden. Operativ bedeutet in diesem Zusammenhang, dass der Granulator und die Rolliertrommel derart miteinander verbunden sind, dass die im Granulator hergestellten Rohgranulate vom Granulator in die Rolliertrommel eingebracht werden können. Beispielsweise erfolgt dies mittels eines zweiten Förderbandes oder einer zweiten Schurre.

In einer speziellen Variante der erfindungsgemäßen Vorrichtung ist der Intensivmischer mittels zwei oder mehreren Förderbändern mit dem Granulator verbunden beziehungsweise ist der Granulator mittels zwei oder mehreren Förderbändern mit der Rolliertrommel verbunden.

Die erfindungsgemäßen Granulate werden vorzugsweise in einer Sinteranlage eingesetzt. Die Granulate werden dabei als Sinterrohmischung in Form einer Schicht in die Sinteranlage eingebracht. Die aus den erfindungsgemäßen Granulaten bestehende Schicht weist im Vergleich zu nach dem Stand der Technik hergestellten Granulaten eine höhere Permeabilität auf. Dadurch wird die Produktivität des Sinterprozesses erhöht, womit eine Verkleinerung diverser Bauteile der Sinteranlage möglich ist. Mittels der erfindungsgemäßen Vorrichtung können im Gegensatz zum Stand der Technik auch feinteilchenförmige Rohstoffe gut verarbeitet werden.

In einer bevorzugten Ausführungsform der erfindungsgemäßen Vorrichtung umfasst der Intensivmischer eine
- Mischtrommel mit einer Mischtrommelachse und zumindest einer rotierbaren Mischtrommelwelle,
- an der Mischtrommelwelle fixierte, normal zur Mischtrommelachse beziehungsweise zur Mischtrommelwelle orientierte Mischwerkzeuge, wobei die Mischtrommelachse und die Mischtrommelwelle im normalen Betriebszustand des Intensivmischers lotrecht oder waagrecht orientiert sind.

Sind die Mischtrommelachse und die Mischtrommelwelle lotrecht orientiert, so ist die Mischtrommel um die Mischtrommelachse rotierbar. Sind die Mischtrommelachse und die Mischtrommelwelle waagrecht orientiert, so ist die Mischtrommel nicht um die Mischtrommelachse rotierbar.

Im Intensivmischer finden durch intensives Mischen der Rohstoffe zunächst eine Zerteilung und ein Aufschluß von möglicherweise vorhandenen Rohstoffagglomeraten statt. Zusätzlich findet dabei eine Homogenisierung beziehungsweise eine besonders gleichmäßige Durchmischung der Rohstoffe statt.

In einer weiteren bevorzugten Ausführungsform der erfindungsgemäßen Vorrichtung umfasst der Granulator
- eine Granulatortrommel mit einer Granulatortrommelachse und zumindest einer rotierbaren Granulatortrommelwelle,
- an der Granulatortrommelwelle fixierte, normal zur Granulatortrommelachse beziehungsweise zur Granulatortrommelwelle orientierte Granulierwerkzeuge, wobei die Granulatortrommelachse und die Granulatortrommelwelle im normalen Betriebszustand des Granulators lotrecht oder waagrecht orientiert sind.

Sind die Granulatortrommelachse und die Granulatortrommelwelle lotrecht orientiert, so ist die Granulatortrommel um die Granulatortrommelachse rotierbar. Sind die Granulatortrommelachse und die Granulatortrommelwelle waagrecht orientiert, so ist die Granulatortrommel nicht um die Granulatortrommelachse rotierbar.

In einer anderen bevorzugten Ausführungsform der erfindungsgemäßen Vorrichtung ist die Rolliertrommel um eine Roliertrommelachse rotierbar, wobei die Rolliertrommelachse im normalen Betriebszustand der Rolliertrommel waagrecht orientiert ist.

In einer weiteren Ausführungsform der erfindungsgemäßen Vorrichtung beträgt die Werkzeugfroudezahl des Intensivmischers mindestens 7, bevorzugt mindestens 9 und die Werkzeugfroudezahl des Granulators mindestens 1, bevorzugt mindestens 5.

Mittels der Werkzeugfroudzahl kann eine Schüttgutbewegung stark vereinfacht charakterisiert werden. Sie ergibt sich aus dem Verhältnis von Zentripetalbeschleunigung zu Erdbeschleunigung.

Vorzugsweise werden die mittels des erfindungsgemäßen Verfahrens hergestellten Granulate in einer Sinteranlage verwendet.

### Kurze Beschreibung der Zeichnungen

### Es zeigt beispielhaft und schematisch

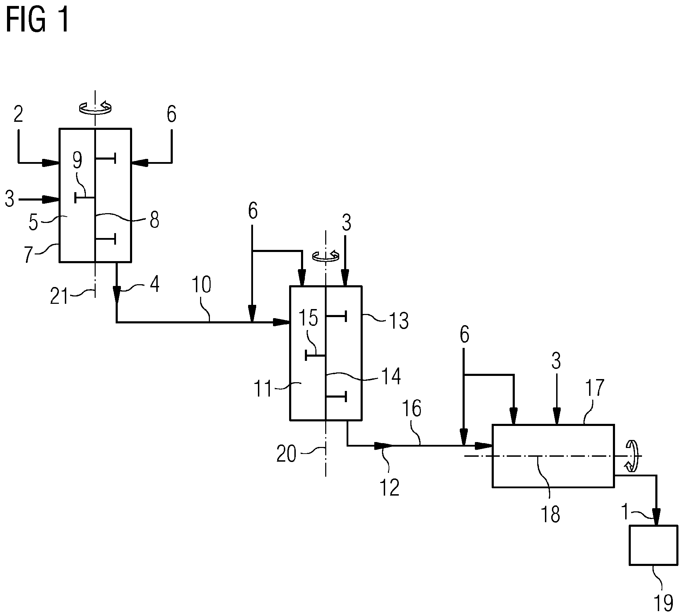

FIG 1 eine Darstellung eines erfindungsgemäßen Verfahrens und einer erfindungsgemäßen Vorrichtung.

### Beschreibung der Ausführungsformen

FIG 1 zeigt eine Darstellung eines erfindungsgemäßen Verfahrens und einer erfindungsgemäßen Vorrichtung zur Herstellung von Granulaten 1. Zunächst erfolgt in einem ersten Verfahrensschritt ein intensives Mischen von Rohstoffen 2, insbesondere Eisenerz, Feineisenerzkonzentrate, Koksgruß, Kalkstein und gegebenenfalls Zusatzstoffen 6, insbesondere Sinterrückgut, Bindemittel, Staub, Stahlwerksreststoffe unter Zugabe von Wasser 3 zu einem Gemisch 4 in einem Intensivmischer 5. Der Wassergehalt des Gemisches 4 weist eine Untergrenze von 3 Massenprozent, vorzugsweise 4 Massenprozent und eine Obergrenze von 9 Massenprozent, vorzugsweise 8 Massenprozent, bezogen auf die Gesamtmasse des Gemisches 4, auf.

Der Intensivmischer 5 weist eine Mischtrommel 7 mit einer in FIG 1 gestrichelt angedeuteten Mischtrommelachse 21 und zumindest eine rotierbare Mischtrommelwelle 8 auf. An der Mischtrommelwelle 8 sind normal zur Mischtrommelachse 21 beziehungsweise zur Mischtrommelwelle 8 orientierte Mischwerkzeuge 9 fixiert, wobei die Mischtrommelachse 21 und die Mischtrommelwelle 8 in der in FIG 1 dargestellten Ausführungsform lotrecht orientiert sind. Die Mischtrommel 7 ist um die Mischtrommelachse 21 rotierbar. Im Intensivmischer 5 finden durch intensives Mischen der Rohstoffe 2 zunächst eine Zerteilung und ein Aufschluß von möglicherweise vorhandenen Rohstoffagglomeraten statt. Zusätzlich findet dabei eine Homogenisierung beziehungsweise eine besonders gleichmäßige Durchmischung der Rohstoffe 2 beziehungsweise der Zusatzstoffe 6 statt. Im dabei entstehenden Gemisch 4 befinden sich gegebenenfalls auch schon erste Mikrogranulate, das sind kleinste Zusammenballungen der Rohstoffe 2, bei denen mehrere kleinere Rohstoffpartikel an einzelnen größeren Rohstoffpartikeln anhaften. Das intensive Mischen des Gemisches 4 im Intensivmischer 5 erfolgt für mindestens 30 Sekunden, bevorzugt für mindestens 40 Sekunden und für maximal 90 Sekunden, bevorzugt für maximal 60 Sekunden. Der Intensivmischer 5 weist eine Werkzeugfroudezahl von mindestens 7, bevorzugt von mindestens 9 auf.

Mittels eines ersten Förderbandes 10 wird das Gemisch 4, gegebenenfalls zusammen mit zumindest einem der oben genannten Zusatzstoffe 6, in einen Granulator 11 eingebracht. Im Granulator 11 erfolgt unter Zugabe von Wasser eine Granulierung des Gemisches 4 zu Rohgranulaten 12. Durch die Zugabe von Wasser 3 wird der Feuchtigkeitsgehalt des Gemisches 4 eingestellt und für die Granulierung optimiert. Der Granulator 11 weist eine Granulatortrommel 13 mit einer in FIG 1 gestrichelt angedeuteten Granulatortrommelachse 20 und zumindest eine rotierbare Granulatortrommelwelle 14 auf. An der Granulatortrommelwelle 14 sind normal zur Granulatortrommelachse 20 beziehungsweise zur Granulatortrommelwelle 14 orientierte Granulierwerkzeuge 15 fixiert, wobei die Granulatortrommelachse 20 und die Granulatortrommelwelle 14 in der in FIG 1 dargestellten Ausführungsform lotrecht orientiert sind. Die Granulatortrommel 13 ist um die Granulatortrommelachse 20 rotierbar. Die Granulierung des Gemisches 4 im Granulator 11 erfolgt für mindestens 50 Sekunden, bevorzugt für mindestens 60 Sekunden und für maximal 120 Sekunden, bevorzugt für maximal 90 Sekunden. Der Granulator 11 weist eine Werkzeugfroudezahl von mindestens 1, bevorzugt von mindestens 5, auf.

Mittels eines zweiten Förderbandes 16 werden die Rohgranulate 12, gegebenenfalls zusammen mit zumindest einem der oben genannten Zusatzstoffe 6 und Feinkoks, in eine Rolliertrommel 17 eingebracht. In der Rolliertrommel 17 erfolgt unter Zugabe von Wasser 3 ein Rollieren und gegebenenfalls Beschichten der Rohgranulate 12 mit Kalziumoxid und/oder Kalziumhydroxid und/oder dem Feinkoks zu den Granulaten 1.

Die Rolliertrommel 17 ist um eine Rolliertrommelachse 18 rotierbar, wobei die Rolliertrommelachse 18 waagrecht orientiert ist. Der Intensivmischer 5, der Granulator 11, die Rolliertrommel 17 und die Förderbänder 10, 16 umfassen Zugabevorrichtungen zur Zugabe der Rohstoffe 2, von Wasser 3 und der Zusatzstoffe 6. Nach dem Rollieren beziehungsweise Beschichten der Rohgranulate 12 in der Rolliertrommel 17 zu den Granulaten 1 werden diese in eine Sinteranlage 19 eingebracht.

Zusammenfassend betrifft die Erfindung ein Verfahren zur Herstellung von Granulaten 1, wobei das Verfahren folgende Verfahrensschritte umfasst:
- in einem ersten Verfahrensschritt intensives Mischen von Rohstoffen 2, insbesondere Eisenerz, Feineisenerzkonzentrate, Koksgruß, Kalkstein und gegebenenfalls Zusatzstoffen 6, insbesondere Sinterrückgut, Bindemittel, Staub, Stahlwerksreststoffe unter Zugabe von Wasser 3 zu einem Gemisch 4 in einem Intensivmischer 5,
- in einem zweiten Verfahrensschritt Einbringen des Gemisches 4 und gegebenenfalls von Zusatzstoffen 6 in einen Granulator 11 und Granulierung des Gemisches 4 unter Zugabe von Wasser 3 zu Rohgranulaten 12,
- in einem dritten Verfahrensschritt Einbringen der Rohgranulate 12, Wasser 3 und gegebenenfalls von Zusatzstoffen 6 und Feinkoks in eine Rolliertrommel 17 und Rollieren und gegebenenfalls Beschichten der Rohgranulate 12 mit Kalziumoxid und/oder Kalziumhydroxid und/oder dem Feinkoks zu den Granulaten 1.

Die erfindungsgemäßen Granulate 1 werden in der Sinteranlage 19 eingesetzt. Die Granulate 1 werden dabei als Sinterrohmischung in Form einer Schicht in die Sinteranlage 19 eingebracht. Die aus den erfindungsgemäßen Granulaten 1 bestehende Schicht weist im Vergleich zu nach dem Stand der Technik hergestellten Granulaten eine homogenere Korngrößenverteilung und damit eine höhere Permeabilität auf. Dadurch wird die Produktivität des Sinterprozesses erhöht, womit eine Verkleinerung diverser Bauteile der Sinteranlage 19 möglich ist. Beim erfindungsgemäßen Verfahren können im Gegensatz zum Stand der Technik auch feinteilchenförmige Rohstoffe 2 gut verarbeitet werden.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen.

### Liste der Bezugszeichen

- 1: Granulate
- 2: Rohstoffe
- 3: Wasser
- 4: Gemisch
- 5: Intensivmischer
- 6: Zusatzstoffe
- 7: Mischtrommel
- 8: Mischtrommelwelle
- 9: Mischwerkzeuge
- 10: erstes Förderband
- 11: Granulator
- 12: Rohgranulate
- 13: Granulatortrommel
- 14: Granulatortrommelwelle
- 15: Granulierwerkzeuge
- 16: zweites Förderband
- 17: Rolliertrommel
- 18: Rolliertrommelachse
- 19: Sinteranlage
- 20: Granulatortrommelachse
- 21: Mischtrommelachse

## Patentansprüche

1. Verfahren zur Herstellung von Granulaten (1), wobei die Granulate (1) als Sinterrohmischung in Form einer Schicht in einer Sinteranlage verwendbar sind, wobei die Herstellung der Granulate (1) folgende Verfahrensschritte umfasst:
- in einem ersten Verfahrensschritt intensives Mischen von Rohstoffen, insbesondere Eisenerz, Feineisenerzkonzentrate, Koksgruß, Kalkstein, und gegebenenfalls Zusatzstoffen (6), insbesondere Sinterrückgut, Bindemittel, Staub, Stahlwerksreststoffe, unter Zugabe von Wasser (3) zu einem Gemisch (4) in einem Intensivmischer (5),
- in einem zweiten Verfahrensschritt Einbringen des Gemisches (4), und gegebenenfalls von Zusatzstoffen (6), in einen Granulator (11), und Granulierung des Gemisches (4), und gegebenenfalls der Zusatzstoffe (6), unter Zugabe von Wasser (3) zu Rohgranulaten (12),
- in einem dritten Verfahrensschritt Einbringen der Rohgranulate (12), Einbringen von Wasser (3), und gegebenenfalls Einbringen von Zusatzstoffen (6) und/oder Feinkoks, in eine Rolliertrommel (17), und Rollieren der Rohgranulate (12) - und gegebenenfalls Beschichten der Rohgranulate (12) mit Kalziumoxid und/oder Kalziumhydroxid und/oder dem Feinkoks - zu den Granulaten (1).

2. Verfahren nach Anspruch 1, **dadurch gekennzeichnet, dass** das intensive Mischen des Gemisches (4) im Intensivmischer (5) für mindestens 30 Sekunden, bevorzugt für mindestens 40 Sekunden und für maximal 90 Sekunden, bevorzugt für maximal 60 Sekunden erfolgt.

3. Verfahren nach einem der Ansprüche 1 oder 2, **dadurch gekennzeichnet, dass** die Granulierung des Gemisches (4) im Granulator (11) für mindestens 50 Sekunden, bevorzugt für mindestens 60 Sekunden und für maximal 120 Sekunden, bevorzugt für maximal 90 Sekunden erfolgt.

4. Verfahren nach einem der Ansprüche 1 bis 3, **dadurch gekennzeichnet, dass** der Wassergehalt des Gemisches (4) eine Untergrenze von 3 Massenprozent, vorzugsweise 4 Massenprozent und eine Obergrenze von 9 Massenprozent, vorzugsweise 8 Massenprozent, bezogen auf die Gesamtmasse des Gemisches (4), aufweist.

5. Vorrichtung zur Durchführung des erfindungsgemäßen Verfahrens nach einem der Ansprüche 1 bis 4, wobei die Vorrichtung umfasst:
- einen Intensivmischer (5) zum intensiven Mischen von Rohstoffen (2), insbesondere Eisenerz, Feineisenerzkonzentrate, Koksgruß, Kalkstein, und gegebenenfalls Zusatzstoffen (6), insbesondere Sinterrückgut, Bindemittel, Staub, Stahlwerksreststoffe, unter Zugabe von Wasser (3) zu einem Gemisch (4),
- einen operativ mit dem Intensivmischer (5) verbundenen Granulator (11) zur Granulierung des Gemisches (4), und gegebenenfalls Zusatzstoffen (6), unter Zugabe von Wasser (3) zu Rohgranulaten (12),
- eine operativ mit dem Granulator (11) verbundene Rolliertrommel (17) zum Rollieren der Rohgranulate (12) - und gegebenenfalls Beschichten der Rohgranulate (12) mit Kalziumoxid und/oder Kalziumhydroxid und/oder Feinkoks - zu Granulaten (1), welche als Sinterrohmischung in Form einer Schicht in einer Sinteranlage verwendbar sind.

6. Vorrichtung nach Anspruch 5, **dadurch gekennzeichnet, dass** der Intensivmischer (5) umfasst:
- eine Mischtrommel (7) mit einer Mischtrommelachse (21) und zumindest einer rotierbaren Mischtrommelwelle (8),
- an der Mischtrommelwelle (8) fixierte, normal zur Mischtrommelachse (21) beziehungsweise zur Mischtrommelwelle (8) orientierte Mischwerkzeuge (9), wobei die Mischtrommelachse (21) und die Mischtrommelwelle (8) im normalen Betriebszustand des Intensivmischers (5) lotrecht oder waagrecht orientiert sind.

7. Vorrichtung nach einem der Ansprüche 5 oder 6, **dadurch gekennzeichnet, dass** der Granulator (11) umfasst:
- eine Granulatortrommel (13) mit einer Granulatortrommelachse (20) und zumindest einer rotierbaren Granulatortrommelwelle (14),
- an der Granulatortrommelwelle (14) fixierte, normal zur Granulatortrommelachse (20) beziehungsweise zur Granulatortrommelwelle (14) orientierte Granulierwerkzeuge (15), wobei die Granulatortrommelachse (20) und die Granulatortrommelwelle (14) im normalen Betriebszustand des Granulators (11) lotrecht oder waagrecht orientiert sind.

8. Vorrichtung nach einem der Ansprüche 5 bis 7, **dadurch gekennzeichnet, dass** die Rolliertrommel (17) um eine Roliertrommelachse (18) rotierbar ist und dass die Rolliertrommelachse (18) im normalen Betriebszustand der Rolliertrommel (17) waagrecht orientiert ist.

9. Vorrichtung nach einem der Ansprüche 5 bis 8, **dadurch gekennzeichnet, dass** der Intensivmischer (5) eine Werkzeugfroudezahl von mindestens 7, bevorzugt von mindestens 9, aufweist.

10. Vorrichtung nach einem der Ansprüche 5 bis 9, **dadurch gekennzeichnet, dass** der Granulator (11) eine Werkzeugfroudezahl von mindestens 1, bevorzugt von mindestens 5, aufweist.

## Claims

1. Method for manufacturing granulates (1), wherein the granulates (1) can be used as a sinter raw mixture in the form of a layer in a sinter plant, wherein the manufacture of the granulates (1) comprises method steps as follows:
- in a first method step, intensively mixing raw materials, in particular iron ore, fine iron ore concentrates, coke breeze, limestone and if applicable admixtures (6), in particular sinter returns, binding agents, dust, residual steelworking materials, while adding water (3), to produce a mixture (4) in an intensive mixer (5),
- in a second method step, introducing the mixture (4) and if applicable admixtures (6) into a granulator (11) and granulating the mixture (4) and if applicable the admixtures (6), while adding water (3), to produce raw granulates (12),
- in a third method step, introducing the raw granulates (12), water (3), and if applicable admixtures (6) and/or coke fines, into a rolling drum (17) and rolling the raw granulates (12) - and if applicable coating the raw granulates (12) with calcium oxide and/or calcium hydroxide and/or the coke fines - to produce the granulates (1).

2. Method according to claim 1, **characterised in that** the intensive mixing of the mixture (4) in the intensive mixer (5) is performed for at least 30 seconds, preferably at least 40 seconds, and for a maximum of 90 seconds, preferably a maximum of 60 seconds.

3. Method according to one of claims 1 or 2, **characterized in that** the granulation of the mixture (4) in the granulator (11) is performed for at least 50 seconds, preferably at least 60 seconds, and for a maximum of 120 seconds, preferably a maximum of 90 seconds.

4. Method according to one of claims 1 to 3, **characterised in that** the water content of the mixture (4) has a lower limit of 3 percent by mass, preferably 4 percent by mass, and an upper limit of 9 percent by mass, preferably 8 percent by mass, relative to the total mass of the mixture (4).

5. Device for performing the method according to the invention according to one of claims 1 to 4, wherein the device comprises:
- an intensive mixer (5) for intensively mixing raw materials (2), in particular iron ore, fine iron ore concentrate, coke breeze, limestone, and if applicable admixtures (6), in particular sinter returns, binding agents, dust and/or residual steelworking materials, while adding water (3), to produce a mixture (4),
- a granulator (11), which is operationally connected to the intensive mixer (5), for granulating the mixture (4) and if applicable admixtures (6), while adding water (3), to produce raw granulates (12),
- a rolling drum (17), which is operationally connected to the granulator (11), for rolling the raw granulates (12)
- and if applicable coating the raw granulates (12) with calcium oxide and/or calcium hydroxide and/or coke fines
- to produce granulates (1), which can be used as the sinter raw mixture in the form of a layer in the sinter plant.

6. Device according to claim 5, **characterized in that** the intensive mixer (5) comprises:
- a mixing drum (7) having a mixing drum axis (21) and at least one rotatable mixing drum shaft (8),
- mixing tools (9) which are fixed to the mixing drum shaft (8) and are so oriented as to be perpendicular to the mixing drum axis (21) or the mixing drum shaft (8), said mixing drum axis (21) and mixing drum shaft (8) being vertically or horizontally oriented in the normal operating state of the intensive mixer (5).

7. Device according to one of claims 5 or 6, **characterized in that** the granulator (11) comprises:
- a granulator drum (13) having a granulator drum axis (20) and at least one rotatable granulator drum shaft (14),
- granulating tools (15) which are fixed to the granulator drum shaft (14) and are so oriented as to be perpendicular to the granulator drum axis (20) or the granulator drum shaft (14), said granulator drum axis (20) and granulator drum shaft (14) being vertically or horizontally oriented in the normal operating state of the granulator (11).

8. Device according to one of claims 5 to 7, **characterised in that** the rolling drum (17) can be rotated about a rolling drum axis (18) and that the rolling drum axis (18) is horizontally oriented in the normal operating state of the rolling drum (17).

9. Device according to one of claims 5 to 8, **characterised in that** the intensive mixer (5) has a tool Froude number of at least 7, preferably at least 9.

10. Device according to one of claims 5 to 9, **characterised in that** the granulator (11) has a tool Froude number of at least 1, preferably at least 5.

## Revendications

1. Procédé pour la fabrication de granulés (1), dans lequel les granulés (1) sont utilisables dans une installation de frittage en tant que mélange brut de frittage sous la forme d'une couche, dans lequel la fabrication des granulés (1) comporte les étapes de procédé suivantes :
- dans une première étape de procédé, mélange intensif de matières brutes, en particulier de minerai de fer, de concentrats de minerai de fer fin, de fine de coke, de calcaire, et éventuellement d'additifs (6), en particulier de déchets de frittage, de liants, de poussière, de résidus sidérurgiques, avec ajout d'eau (3) en un mélange (4) dans un mélangeur intensif (5),
- dans une deuxième étape de procédé, introduction du mélange (4), et éventuellement d'additifs (6), dans un granulateur (11), et granulation du mélange (4), et éventuellement des additifs (6), avec ajout d'eau (3) en des granulés bruts (12),
- dans une troisième étape de procédé, introduction des granulés bruts (12), introduction d'eau (3), et éventuellement introduction d'additifs (6) et/ou de fine de coke, dans un tambour de roulage (17), et roulage des granulés bruts (12) - et éventuellement enrobage des granulés bruts (12) avec de l'oxyde de calcium et/ou de l'hydroxyde de calcium et/ou la fine de coke - en les granulés (1).

2. Procédé selon la revendication 1, **caractérisé en ce que** le mélange intensif du mélange (4) dans le mélangeur intensif (5) s'effectue pendant au moins 30 secondes, de préférence pendant au moins 40 secondes et pendant 90 secondes au maximum, de préférence pendant 60 secondes au maximum.

3. Procédé selon l'une des revendications 1 ou 2, **caractérisé en ce que** la granulation du mélange (4) dans le granulateur (11) s'effectue pendant au moins 50 secondes, de préférence pendant au moins 60 secondes et pendant 120 secondes au maximum, de préférence pendant 90 secondes au maximum.

4. Procédé selon l'une des revendications 1 à 3, **caractérisé en ce que** la teneur en eau du mélange (4) possède une limite inférieure de 3 pour cent en masse, de préférence de 4 pour cent en masse, et une limite supérieure de 9 pour cent en masse, de préférence de 8 pour cent en masse, rapporté à la masse totale du mélange (4).

5. Dispositif pour la mise en oeuvre du procédé selon l'invention selon l'une des revendications 1 à 4, le dispositif comportant :
- un mélangeur intensif (5) pour le mélange intensif de matières brutes (2), en particulier de minerai de fer, de concentrats de minerai de fer fin, de fine de coke, de calcaire, et éventuellement d'additifs (6), en particulier de déchets de frittage, de liants, de poussière, de résidus sidérurgiques, avec ajout d'eau (3) en un mélange (4),
- un granulateur (11) relié fonctionnellement au mélangeur intensif (5) pour la granulation du mélange (4), et éventuellement d'additifs (6), avec ajout d'eau (3) en des granulés bruts (12),
- un tambour de roulage (17) relié fonctionnellement au granulateur (11) pour le roulage des granulés bruts (12) - et éventuellement l'enrobage des granulés bruts (12) avec de l'oxyde de calcium et/ou de l'hydroxyde de calcium et/ou de la fine de coke - en granulés (1), lesquels sont utilisables dans une installation de frittage en tant que mélange brut de frittage sous la forme d'une couche.

6. Dispositif selon la revendication 5, **caractérisé en ce que** le mélangeur intensif (5) comporte :
- un tambour de mélange (7) avec un axe de tambour de mélange (21) et au moins un arbre de tambour de mélange rotatif (8),
- des outils de mélange (9) fixés sur l'arbre de tambour de mélange (8), orientés perpendiculairement à l'axe de tambour de mélange (21) ou à l'arbre de tambour de mélange (8), dans lequel l'axe de tambour de mélange (21) et l'arbre de tambour de mélange (8) sont orientés verticalement ou horizontalement dans l'état de fonctionnement normal du mélangeur intensif (5).

7. Dispositif selon l'une des revendications 5 ou 6, **caractérisé en ce que** le granulateur (11) comporte :
- un tambour de granulateur (13) avec un axe de tambour de granulateur (20) et au moins un arbre de tambour de granulateur rotatif (14),
- des outils de granulation (15) fixés sur l'arbre de tambour de granulateur (14), orientés perpendiculairement à l'axe de tambour de granulateur (20) ou à l'arbre de tambour de granulateur (14), dans lequel l'axe de tambour de granulateur (20) et l'arbre de tambour de granulateur (14) sont orientés verticalement ou horizontalement dans l'état de fonctionnement normal du granulateur (11).

8. Dispositif selon l'une des revendications 5 à 7, **caractérisé en ce que** le tambour de roulage (17) est rotatif autour d'un axe de tambour de roulage (18) et **en ce que** l'axe de tambour de roulage (18) est orienté horizontalement dans l'état de fonctionnement normal du tambour de roulage (17).

9. Dispositif selon l'une des revendications 5 à 8, **caractérisé en ce que** le mélangeur intensif (5) possède un nombre de Froude d'outil d'au moins 7, de préférence d'au moins 9.

10. Dispositif selon l'une des revendications 5 à 9, **caractérisé en ce que** le granulateur (11) possède un nombre de Froude d'outil d'au moins 1, de préférence d'au moins 5.
